Europäisches Patentamt

European Patent Office

Office européen des brevets

(19)

(11) **EP 1 292 047 B1**

(12) **FASCICULE DE BREVET EUROPEEN**

(45) Date de publication et mention
de la délivrance du brevet:
**29.12.2004 Bulletin 2004/53**

(51) Int Cl.[7]: **H04B 7/005**, G01S 3/74

(21) Numéro de dépôt: **02292171.2**

(22) Date de dépôt: **03.09.2002**

(54) **Procédé et dispositif de détection de sources dans un système de communications**

Verfahren und Vorrichtung zur Quellendetektion in einem Kommunikationssystem

Method and apparatus for detecting sources in a communication system

(84) Etats contractants désignés:
**AT BE BG CH CY CZ DE DK EE ES FI FR GB GR
IE IT LI LU MC NL PT SE SK TR**

(30) Priorité: **05.09.2001 FR 0111486**

(43) Date de publication de la demande:
**12.03.2003 Bulletin 2003/11**

(73) Titulaire: **Thales
92200 Neuilly Sur Seine (FR)**

(72) Inventeurs:
• **Ferreol, Anne, Thales Intellectual Property
94117 Arceuil Cedex (FR)**
• **Delaveau, François, Thales Intellectual Property
94117 Arceuil Cedex (FR)**

(74) Mandataire: **Dudouit, Isabelle
THALES Intellectual Property,
31-33 avenue Aristide Briand
94117 Arceuil Cedex (FR)**

(56) Documents cités:
• **CHEN W ET AL: "Detection of the number of signals in noise with banded covariance matrices" IEE PROCEEDINGS: RADAR, SONAR & NAVIGATION, INSTITUTION OF ELECTRICAL ENGINEERS, GB, vol. 143, no. 5, 3 octobre 1996 (1996-10-03), pages 289-294, XP006006735 ISSN: 1350-2395**
• **WAX M ET AL: "DETECTION OF THE NUMBER OF COHERENT SIGNALS BY THE MDL PRINCIPLE" IEEE TRANSACTIONS ON ACOUSTICS, SPEECH AND SIGNAL PROCESSING, IEEE INC. NEW YORK, US, vol. 37, no. 8, août 1989 (1989-08), pages 1190-1196, XP001033542 ISSN: 0096-3518**
• **SWINDLEHURST A: "Alternative algorithm for maximum likelihood DOA estimation and detection" IEE PROCEEDINGS: RADAR, SONAR & NAVIGATION, INSTITUTION OF ELECTRICAL ENGINEERS, GB, vol. 141, no. 6, 1 décembre 1994 (1994-12-01), pages 293-9, XP006002094 ISSN: 1350-2395**
• **LI C -C: "Estimating the number of signals by chi-square statistics" ICASSP 88: 1988 INTERNATIONAL CONFERENCE ON ACOUSTICS, SPEECH, AND SIGNAL PROCESSING (CAT. NO.88CH2561-9), NEW YORK, NY, USA, 11-14 APRIL 1988, pages 2336-2339 vol.4, XP010072594 1988, New York, NY, USA, IEEE, USA**
• **CESBRON F ET AL: "Locating GSM mobiles using antenna array" ELECTRONICS LETTERS, IEE STEVENAGE, GB, vol. 34, no. 16, 6 août 1998 (1998-08-06), pages 1539-1540, XP006010131 ISSN: 0013-5194**

## Description

La présente invention concerne un procédé pour déterminer la présence de sources émettrices et éventuellement leur nombre dans un système comportant au moins un récepteur recevant des signaux provenant d'émetteurs de radiocommunication.

Elle trouve notamment son application dans le domaine du traitement d'antennes où, sur un système composé de plusieurs antennes, on reçoit des signaux provenant d'émetteurs de radiocommunication. Les signaux émis sont par exemple des modulations numériques comportant un ou plusieurs signaux de synchronisation.

Elle s'applique aussi dans le domaine de la goniométrie ou estimation des angles d'arrivée des sources radioélectriques, afin d'obtenir soit les incidences des mobiles soit celle des stations de base.

La détection du nombre de sources présentes permet notamment la mise en oeuvre des méthodes de goniométrie à haute résolution.

Elle concerne aussi le domaine du filtrage adaptatif et celui de l'égalisation pour les télécommunications, en particulier, les techniques de synchronisation sur des séquences de référence connues comme les séquences TSC (Training Sequence Channel) ou SCH (Synchronisation Channel) de la norme GSM. Ces techniques de synchronisation font appel à des notions de détection.

Il est connu de l'art antérieur d'estimer le nombre $M_0$ de sources dans un système de radiocommunication.

Par exemple, une estimation classique consiste à appliquer un algorithme de type MUSIC connu de l'Homme du métier. Pour cela, il est nécessaire de connaître le nombre de sources incidentes qui est égal au rang de la matrice de covariance $R_{xx}=E[\underline{x}(t)\ \underline{x}(t)H]$ des signaux $\underline{x}(t)$ reçus par les capteurs. Le rang de la matrice de covariance des signaux capteurs $\underline{x}(t)$ est déterminé à partir d'une estimée de cette matrice sur T échantillons $\underline{x}(t_k)$ statistiquement indépendants :

$$\hat{R}_{xx} = \frac{1}{T} \sum_{k=1}^{T} \underline{x}(t_k)\, \underline{x}(t_k)^H \tag{1}$$

tel que

$$\underline{x}(t) = \sum_{m=1}^{M_0} \underline{a}(u_m)\, s_m^{\,0}(t) + \underline{b}(t),$$

avec $\underline{b}(t)$ le bruit blanc gaussien, m l'indice de l'émetteur ou source émettrice, $\underline{a}(u_m)$ le vecteur directeur de la source d'incidence $u_m$ et $s_m^{\,0}(t)$ le signal transmis par cette $m^{ième}$ source. Une source peut être un multi-trajets provenant d'un émetteur.

En présence de $M_0$ sources avec un signal temporel $\underline{x}(t_k)$ gaussien, le rapport de vraisemblance, $V_{classique}$ ($M=M_0/M_0$), utilisant les $N-M_0$ plus faibles valeurs propres de la matrice $R_{xx}$ suit une loi du chi-2 à $(N-M_0)^2-1$ degrés de libertés, sachant que :

$$V_{classique}(M/M_0) = -2\ T\ \left[ \ln\!\left(\left[\prod_{m=M+1}^{N}\lambda_m\right]\right) - (N-M)\ln\!\left(\hat{\sigma}^{\,2}\right)\right] \tag{2}$$

avec

$$\hat{\sigma}^{\,2} = \frac{1}{N-M} \sum_{m=M_0+1}^{N}\lambda_m$$

$\lambda_m$: valeur propre de $\hat{R}_{xx}$ pour $1\leq m\leq N$

N : nombre de capteurs du système de réception ou le nombre de voies de réception.

Ceci donne une loi de vraisemblance :

$$V_{classique}([M=M_0]/M_0) \sim \text{Chi-2 à } (N-M_0)^2-1 \text{ avec dim}\{\underline{x}(t)\}=N \tag{3}$$

La connaissance de la loi de probabilité de $V_{classique}(M_0/M_0)$ permet de fixer le seuil $\alpha_M$ pour lequel la probabilité d'avoir un nombre de sources strictement plus grand que M sources soit proche de 1 ($p_d \sim 1$) : les seuils $\alpha_M$ sont choisis dans la table du chi-2 avec une probabilité de fausse alarme $p_{fa}$ faible et un nombre de degrés de liberté égal à **$(N-M)^2-1$**. Connaissant la loi de probabilité $V_{classique}(M_0/M_0)$, on cherche donc à prendre la valeur maximale de la variable aléatoire $V_{classique}(M_0/M_0)$ pour que $V_{classique}(M_0/M_0) < \alpha_M$ avec une probabilité de 1- $p_{fa}$. On peut alors construire le test de détection suivant :

- si $V_{classique}(M/M_0) \geq \alpha_M$, le nombre de sources $M_0$ présentes est supérieur à M,
- si $V_{classique}(M/M_0) < \alpha_M$, le nombre de sources $M_0$ présentes est inférieure ou égale à M.

Pour déterminer le nombre de sources $M_0$ on commence par tester la présence de M=0 source, puis M=1 jusqu'à ce que $V_{classique}(M/M_0)$ soit inférieur au seuil $\alpha_M$. Le nombre de sources correspond alors à la valeur vérifiant l'inégalité : si $V_{classique}(M/M_0) < \alpha_M$ on prend $M_0$=M. On rappelle que ce test de détection statistique peut fonctionner uniquement lorsque le bruit b(t) est blanc, c'est à dire que sa matrice de covariance vérifie :

$$R_{bb} = E[\underline{b}(t) \, \underline{b}(t)^H] = \sigma^2 I$$

Où I est la matrice unité de dimension NxN.

Il est aussi connu de l'art antérieur, une méthode pour estimer le nombre $M_0$ de sources communes à deux observations $\underline{u}(t)$ et $\underline{v}(t)$ de même longueur.

Dans ce cas, il faut connaître le rang d'une matrice d'intercorrélation $R_{uv}=E[\underline{u}(t) \, \underline{v}(t)^H]$ entre des observations $\underline{u}(t)$ et $\underline{v}(t)$ enregistrées sur un réseau de N capteurs pouvant permettre de réaliser des algorithmes de goniométrie à référence. En effet, une séquence de référence d'un mobile peut apparaître aux instants $t_0$ et $t_0+ T_{trame}$, où $T_{trame}$ désigne la longueur d'une trame GSM, par exemple. Dans ces conditions, il est possible de construire une matrice d'intercorrélation $R_{uv}$ d'énergie non nulle à partir des signaux $\underline{u}(t)= \underline{x}(t-t_0)$ et $\underline{v}(t)= \underline{x}(t-t_0-T_{trame})$.

De façon générale on cherche à déterminer le nombre $M_0$ de sources communes aux signaux $\underline{u}(t)$ et $\underline{v}(t)$ tel que :

$$\underline{u}(t) = \sum_{m=1}^{M_0} \underline{a}(u_m) \, s_m^0(t) + \underline{b}_u(t) \quad \text{et} \quad \underline{v}(t) = \sum_{m=1}^{M_0} \underline{a}(u_m) \, s_m^0(t) + \underline{b}_v(t) \tag{4}$$

Les observations $\underline{u}(t)$ et $\underline{v}(t)$ se distinguent par les vecteurs bruits $\underline{b}_u(t)$ et $\underline{b}_v(t)$ constitués du bruit de fond ainsi que de brouilleurs reçus indépendamment sur $\underline{u}(t)$ et $\underline{v}(t)$. Les vecteurs $\underline{b}_u(t)$ et $\underline{b}_v(t)$ sont statistiquement décorrélés et gaussiens. Le procédé détermine le rang de la matrice $R_{uv}$ à partir d'une estimée de cette matrice sur T échantillons $\underline{u}(t_k)$ puis $\underline{v}(t_k)$ statistiquement indépendants :

$$\hat{R}_{uv} = \frac{1}{T} \sum_{k=1}^{T} \underline{u}(t_k) \, \underline{v}(t_k)^H \tag{5}$$

Pour connaître le rang de la matrice $\hat{R}_{uv}$ on estime celui de sa forme normalisée R. En présence de $M_0$ sources avec des signaux temporels $\underline{u}(t_k)$ et $\underline{v}(t_k)$ gaussiens, le rapport de vraisemblance $V_{uv}(M=M_0/M_0)$ utilisant les N-$M_0$ plus faibles valeurs propres de R suit une loi du chi-2 à **$2(N-M_0)^2$** degrés de libertés. Ce rapport de vraisemblance vérifie :

$$V_{uv}(M/M_0) = -2\,T\,\ln\left(\left[\prod_{m=M+1}^{N}\mu_m\right]\right) \qquad (6)$$

où $\mu_m$ est une valeur propre de $R = I-UU^H$ classée de façon décroissante pour $1 \leq m \leq N$, où N est le nombre de capteurs. La matrice U est construite à partir des vecteurs $\underline{u}(t_k)$ et $\underline{v}(t_k)$ de la façon suivante :

$$U = \hat{R}_{uu}^{-1/2}\,\hat{R}_{uv}\,\hat{R}_{vv}^{-1/2}$$

tel que :

$$\hat{R}_{uu} = \frac{1}{T}\sum_{k=1}^{T}\underline{u}(t_k)\,\underline{u}(t_k)^H \quad et \quad \hat{R}_{vv} = \frac{1}{T}\sum_{k=1}^{T}\underline{v}(t_k)\,\underline{v}(t_k)^H$$

La loi de vraisemblance s'exprime alors de la manière suivante (7) :

$$V_{uv}(M=M_0/M_0) \sim Chi\text{-}2 \text{ à } 2(N-M_0)^2 \text{ degrés de libertés}$$

avec

$$dim\{\underline{u}(t)\} = dim\{\underline{v}(t)\} = Nx1$$

La connaissance de la loi de probabilité de $V_{uv}(M_0/M_0)$ permet de fixer le seuil $\alpha_M$ pour lequel la probabilité d'avoir un nombre de sources strictement plus grand que M sources soit proche de 1 ($p_d \sim 1$): les seuils $\alpha_M$ sont choisis dans la table du chi-2 avec une probabilité de fausse alarme $p_{fa}$ faible et un nombre de degrés de liberté égal à **2 $(N-M)^2$** : connaissant la loi de $V_{uv}(M_0/M_0)$, on cherche donc à prendre la valeur maximale de la variable aléatoire $V_{uv}(M_0/M_0)$ pour que $V_{uv}(M_0/M_0) < \alpha_M$ avec une probabilité de 1- $p_{fa}$. On peut alors construire le test de détection suivant :

- si $V_{uv}(M/M_0) > \alpha_M$, le nombre de sources $M_0$ présentes est supérieur à M,
- si $V_{uv}(M/M_0) < \alpha_M$, le nombre de sources $M_0$ présentes est inférieur ou égal à M.

Pour déterminer le nombre de sources $M_0$ on commence par tester la présence de M=0 source, puis M=1 jusqu'à ce que $V_{uv}(M/M_0)$ soit inférieur au seuil $\alpha_M$. Le nombre de sources correspond alors à la valeur vérifiant l'inégalité : si $V_{uv}(M/M_0) < \alpha_M$ on prend $M_0$=M.

Le document de CHEN intitulé "Detection of the number of signals in noise with banded covariance matrices" publié IEE, Proc-Radar, Sonar Navig, vol 143 N°5 October 1996 divulgue une méthode de detection utilisant le calcul d'un rapport de vraisemblance entre deux observations issues de 2 réseau de capteurs différents et une loi de vraisemblance sensiblement égale à une loi de chi-2 à $2(N_1-M_0)(N_2-M_0)$.

Si les méthodes décrites dans l'art antérieur conduisent à de bons résultats dans certains cas, elles sont toutefois limitées dans leurs applications. Par exemple, elles ne permettent pas de détecter la présence et/ou le nombre de sources communes à plusieurs observations $\underline{u}(t)$ et $\underline{v}(t)$ ayant des longueurs différentes.

La présente invention propose notamment de déterminer la présence et le nombre de sources ou d'émetteurs communs à plusieurs observations de longueur différentes $N_1$, $N_2$,.... au sein d'un système comportant au moins un réseau de $N=N_1$ capteurs.

L'objet de l'invention concerne un procédé de détection de sources émettrices de radiocommunication $M_0$ communes à plusieurs observations $\underline{u}(t)$ et $\underline{v}(t)$ correspondant à des signaux issues des sources émettrices et ayant des longueurs $N_1$ et $N_2$ différentes, au sein d'un seul réseau de capteurs, les signaux émis par les sources ayant une séquence de référence d(t), comprenant les étapes suivantes :

- définir une loi de vraisemblance $V_{uv}([M=M_0]/M_0)$ sensiblement égale à une loi de Chi-2 à $2(N_1-M_0)(N_2-M_0)$ degrés de libertés avec $N_1 \leq N_2$,

$$\dim\{\,\underline{u}(t))=N_1 x1 \text{ et } \dim\{\underline{v}(t)\}=N_2 x1,$$

- déterminer un seuil de détection $\alpha_M$ afin d'obtenir une probabilité de fausse alarme faible et afin d'obtenir un nombre de degrés de liberté tenant compte des longueurs $N_1$ et $N_2$ et du nombre de sources $M_0$,
- déterminer la présence et/ou le nombre des sources $M_0$ en appliquant la loi de vraisemblance et le seuil $\alpha_M$.

caractérisé en ce que

- on prend comme vecteur d'observation $\underline{u}(t)$ le vecteur de référence $\underline{r}^1_L(t-t_0)$ composé du signal de référence $d_1(t)$ de la source émettrice m=1 avec $N_1$=L et comme vecteur d'observation $\underline{v}(t)$ le vecteur reçu $\underline{x}(t)$ sur les capteurs avec $N_2$=N (L correspond au nombre de décalages temporels du signal de référence, N correspond au nombre de capteurs),
- on détermine la ou les positions de synchronisation correspondant aux instants du vecteur référence $\underline{r}^1_L(t-t_0)$.

Selon une autre variante de réalisation, le procédé comporte une étape de détermination du nombre Pm de multi-trajets pour une source émettrice m donnée en cherchant une cohérence entre les observations $\mathbf{x}^m(t)$ et le vecteur de référence $\mathbf{r}^m_L(t)$ et en vérifiant $\mathbf{u}(t)= \mathbf{r}^m_L(t)$ et $\dim\{\mathbf{u}(t)\}=N_1 x1$ avec $N_1$=L.

Le procédé est utilisé dans un système de radiocommunication de type GSM.

L'invention concerne aussi un dispositif permettant de mettre en oeuvre le procédé précité.

L'objet de la présente invention offre notamment les avantages suivants :

- la possibilité de détecter la présence et éventuellement le nombre de sources communes à des observations ayant des longueurs différentes, obtenues sur un nombre de capteurs différent,
- déterminer les positions de synchro pour le cas d'émetteurs se propageant suivant plusieurs multi-trajets,
- déterminer le nombre de multi-trajets Pm d'un émetteur.

D'autres caractéristiques et avantages apparaîtront à la lecture de la description détaillée d'un mode de réalisation pris à titre d'exemple illustratif et nullement limitatif illustré par les dessins annexés qui représentent :

- La figure 1 un exemple de système de radiocommunication comportant une source émettrice et deux stations de base équipées chacune d'un réseau de capteurs,
- La figure 2 un exemple de signal comportant un signal de référence d(t),
- La figure 3 des résultats validant le procédé selon l'invention,
- La figure 4 un diagramme schématisant le recouvrement temporel de deux signaux apparaissant à deux instants différents.

Afin de mieux faire comprendre le principe mis en oeuvre dans la présente invention, la description qui suit est donnée à titre illustratif et nullement limitatif dans le cadre d'un réseau de radiocommunication utilisant des signaux comportant un signal de synchronisation, ou signal de référence, par exemple des signaux de type GSM.

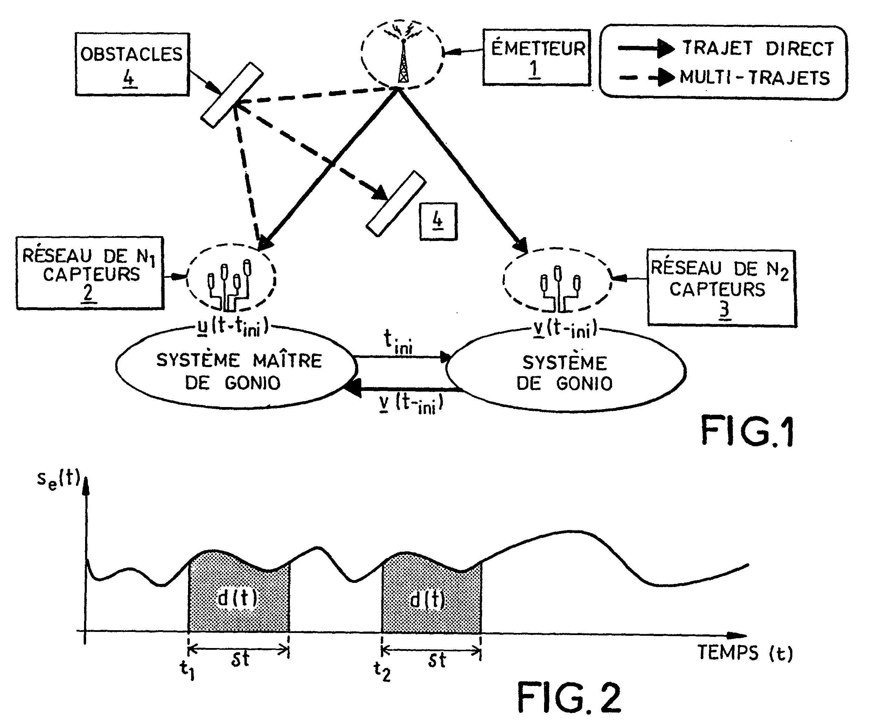

La figure 1 représente un exemple de système de communication comportant une source émettrice 1, une station de base 2 équipée d'un réseau de $N_1$ capteurs et une station de base 3 équipée d'un réseau de $N_2$ capteurs, avec $N_1$ différent de préférence de $N_2$. Les capteurs reçoivent les signaux issus de la source émettrice qui peuvent correspondre à des trajets directs (indiqués en traits pleins sur la figure) ou des trajets avec réflexion sur des obstacles 4 (indiqués en pointillés). Ces signaux correspondent à ce qui est désigné dans la description sous le terme « observations ». Les $N_1$ et $N_2$ capteurs constituent les voies de réception.

Une des deux stations de base est maîtresse, par exemple la station 2 sur la figure. Il en résulte qu'elle récupère par voie filaire par exemple les signaux acquis sur l'autre station de base 3. Elle est alors pourvue d'un processeur permettant d'exécuter notamment les différentes étapes du procédé selon l'invention, ainsi que d'effectuer des opérations de goniométrie ou d'autres traitements de signaux. De plus, la station maîtresse 2 envoie, par exemple par voie filaire ou radio, à l'autre station de base l'instant d'acquisition du premier échantillon de façon à rendre synchrone les acquisitions des deux stations. La deuxième station est alors munie d'un processeur qui permet d'acquérir des signaux à un instant donné et aussi de communiquer avec la station maîtresse. Les deux systèmes de goniométrie équipant les stations reçoivent en commun le trajet direct.

Sans sortir du cadre de l'invention, le système de communication comporte par exemple un seul réseau de $N_1$=N capteurs recevant une observation $\underline{u}(t)$ et équipé d'un processeur adapté à déterminer à partir de cette observation $\underline{u}(t)$ de longueur N égale au nombre de capteurs, un vecteur d'observation $\underline{v}(t)$ de longueur $N_2$=M différente de N.

L'idée de l'invention s'applique par exemple à des observations $\underline{u}(t)$ et $\underline{v}(t)$ de longueur différentes respecti-

vement désignées $N_1$ et $N_2$.

La description fait appel à la notion de vecteur d'observation. Un vecteur d'observation de longueur $N_1$ ou $N_2$ est constitué des signaux capteurs $x_n(t)$ (ou du signal de référence $d_m(t)$ ainsi que de une ou plusieurs versions retardées $x_n(t-k)$ (respectivement $d_m(t-k)$ de ce signal). Sans version retardée, les signaux reçus sur un réseau de capteurs constituent un vecteur d'observation de longueur égale au nombre de capteurs. Les vecteurs d'observation $\underline{u}(t)$ et $\underline{v}$(t) sont constitués de signaux dont la composition. dépend de l'application.

Les observations $\underline{u}(t)$ et $\underline{v}(t)$ ont la structure suivante (8) :

$$\underline{u}(t) = \sum_{m=1}^{M_0} \underline{a}(u_m)\, s_m^{\,0}(t) + \underline{b}_u(t) \quad \text{et} \quad \underline{v}(t) = \sum_{m=1}^{M_0} \underline{c}(u_m)\, s_m^{\,0}(t) + \underline{b}_v(t)$$

avec

$$\dim\{\underline{u}(t)\} = N_1 x1 \qquad \text{et} \qquad \dim\{\underline{v}(t)\} = N_2 x1$$

$\underline{a}(u_m)$ est par exemple le vecteur directeur du réseau de $N_1$ capteurs pour la source d'incidence $u_m$.
$\underline{c}(u_m)$ est par exemple le vecteur directeur du réseau de $N_2$ capteurs pour la même source d'incidence $u_m$.
$M_0$ correspond au nombre de sources communes des observations $\underline{u}(t)$ et $\underline{v}(t)$.

Les bruits $\underline{b}_u(t)$ et $\underline{b}_v(t)$ sont par exemple composés du bruit de fond ainsi que de brouilleurs indépendamment reçus sur les deux vecteurs observations.

Le nombre $M_0$ de sources trouvé correspond au rang de la matrice de covariance spécifique $R_{uv}=E[\underline{u}(t)\,\underline{v}(t)^H]$ utilisée pour réaliser une goniométrie.

On s'intéresse donc à connaître le rang de la matrice d'intercorrélation $R_{uv}=E[\underline{u}(t)\,\underline{v}(t)^H]$ de dimension $N_1 x N_2$ qui possède comme propriété dans le cadre de la présente invention d'être non carré, car $N_1$ est différent de $N_2$.

Le procédé selon l'invention repose sur le principe suivant :Il a été découvert que le rapport de vraisemblance $V_{uv}([M=M_0]/M_0)$ utilisant les $N_1-M_0$ plus faibles valeurs singulières de R (forme normalisée de la matrice) suit une loi du chi-2 prenant en compte les longueurs de chacun des vecteurs d'observations concernés, donc une loi du chi-2 à **$2(N_1-M_0)\,(N_2-M_0)$** degrés de libertés. Lorsque $N_1 \leq N_2$, ce rapport de vraisemblance vérifie :

$$V_{uv}(M/M_0) = -2\, T\, \ln\left(\left[\prod_{m=M+1}^{N_1} \mu_m\right]\right) \quad (9)$$

où $\mu_m$ est une valeur propre de $R= I-UU^H$ classée de façon décroissante pour $1 \leq m \leq N_1$, avec $N_1$ le nombre de capteurs du réseau d'observation $\underline{u}(t_k)$ et I la matrice identité de dimension $N_1 x N_1$. La matrice U est construite à partir des vecteurs $\underline{u}(t_k)$ et $\underline{v}(t_k)$ de la façon suivante :

$$U = \hat{R}_{uu}^{-1/2}\ \hat{R}_{uv}\ \hat{R}_{uu}^{-1/2}$$

tel que :

$$\hat{R}_{uu} = \frac{1}{T}\sum_{k=1}^{T} \underline{u}(t_k)\,\underline{u}(t_k)^H \quad \text{et} \quad \hat{R}_{vv} = \frac{1}{T}\sum_{k=1}^{T} \underline{v}(t_k)\,\underline{v}(t_k)^H \qquad (10)$$

Le processeur de la station maîtresse, ou réseau de capteurs maître (Par exemple réseau de vecteur observation $\underline{u}(t_k)$) mémorise une loi de vraisemblance ayant l'expression suivante :

$$V_{uv}([M=M_0]/M_0) \sim \text{Chi-2 à } 2(N_1-M_0)(N_2-M_0) \text{ degrés de libertés} \qquad (11)$$

avec

$$N_1 \leq N_2, \ \dim\{\underline{u}(t)\}=N_1x1 \text{ et } \dim\{\underline{v}(t)\}=N_2x1.$$

A partir de la connaissance de la loi de probabilité de vraisemblance $V_{uv}([M=M_0]/M_0)$, ce processeur détermine une valeur de seuil $\alpha_M$ pour lequel la probabilité d'avoir strictement plus de M sources est proche de 1 ($p_d \sim 1$) : les seuils $\alpha_M$ sont choisis dans la table du chi-2 avec une probabilité de fausse alarme $p_{fa}$ faible et un nombre de degrés de liberté égal à **$2(N_1-M/M) (N_2-M_0)$** . Connaissant la loi de $V_{uv}(M/M)$, le procédé considère la valeur maximale $\alpha_M$ de la variable aléatoire $V_{uv}(M/M)$ pour que $V_{uv}(M/M)<\alpha_M$ avec une probabilité de $1-p_{fa}$. A partir de ces valeurs de seuil $\alpha_M$ ($\alpha_0, \alpha_1,...$) le processeur exécute le test de détection suivant :

- si $V_{uv}(M/M_0) \geq \alpha_M$, le nombre de sources $M_0$ présentes est supérieur à M,
- si $V_{uv}(M/M_0) < \alpha_M$, le nombre de sources $M_0$ présentes est inférieure ou égale à M.

Pour déterminer le nombre de sources $M_0$, le processeur commence par tester la présence de M=0 source puis M=1 jusqu'à ce que $V_{uv}(M/M_0)$ soit inférieur au seuil $\alpha_M$. Le procédé en déduit que M= $M_0$.

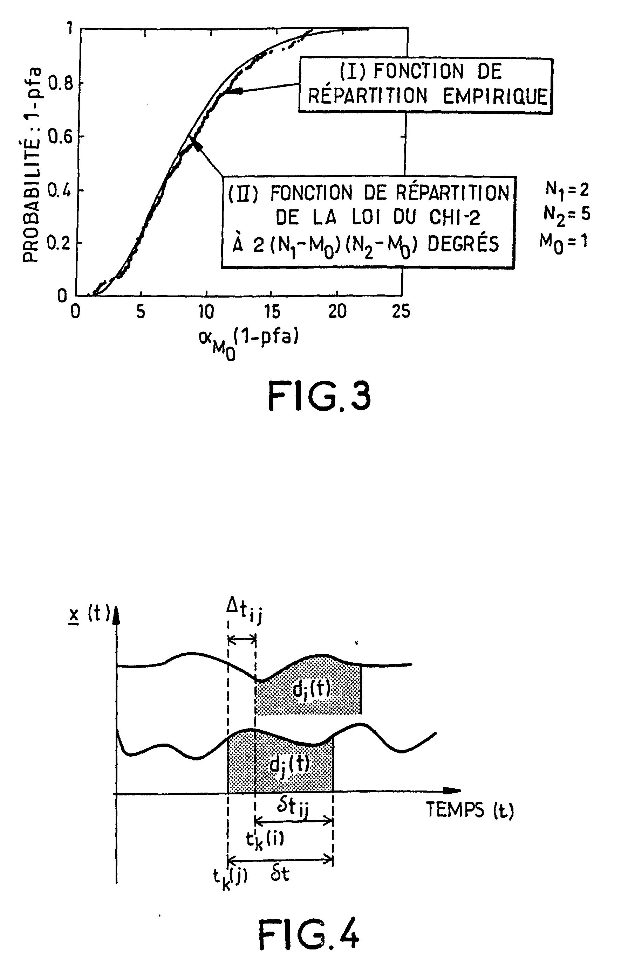

La figure 3 représente le seuil $\alpha_{M0}(pfa)$ en fonction de la probabilité pfa et deux courbes (I, II) représentant respectivement la fonction de répartition empirique (I) et la fonction de répartition (II) utilisée dans le procédé selon l'invention, pour $N_1$ =2, $N_2$=5 et $M_0$=1 (ce qui correspond à une seule source). La fonction de répartition empirique a été déterminée en calculant 100 fois la variable aléatoire $V_{uv}(M=M_0/M_0)$ avec des réalisations de bruit $\underline{b}_u(t)$ et $\underline{b}_v(t)$ différentes et la probabilité pfa a été obtenue de la façon suivante :

$$pfa = \frac{1}{nb} \underset{1 \leq k \leq nb}{nombre} \left( V_{uv}(M=M_0/M_0)_k > \alpha_{M0} \right) \qquad (12)$$

avec $V_{uv}(M=M_0/M_0)_k$ le rapport de vraisemblance calculé à la $k^{\text{ième}}$ réalisation.

La superposition ou coïncidence de ces deux courbes (I) et (II) prouve que la loi de $V_{uv}(M=M_0/M_0)$ est bien une loi de chi-2 à $2(N_1-M_0)(N_2-M_0)$ degrés de libertés.

Le procédé permet ainsi d'obtenir le nombre Mo de sources communes à des vecteurs d'observations de longueurs $N_1$ et $N_2$ différentes.

Le procédé selon l'invention permet aussi d'obtenir des instants de synchronisation ou le nombre de multi-trajets associés à un émetteur.

Pour faciliter la compréhension et avant de détailler certaines applications spécifiques de la présente invention, quelques rappels relatifs aux signaux vont être donnés. La présente invention met en jeu plusieurs émetteurs de signaux $s_m(t)$ comportant chacun un signal de référence $d_m(t)$.

La figure 2 représente une structure de signal $s_e(t)$ comportant un signal de référence $d(t)$ connu sur une plage temporelle telle que $d(t) = s_e(t - t_k)$ pour $0< t < \delta t$ et k=1,2, où $\delta t$ correspond à la durée temporelle de la séquence ou signal de référence.

Ainsi entre les deux instants $t_k$ et $t_k+ \delta t$, le signal émis par l'émetteur est le signal de synchronisation $d(t)$ pour divers instants $t_1, t_2,$ ..etc.

**Modèle du signal reçu sur les capteurs**

En présence de $M_0$ émetteurs utiles, le signal reçu sur les capteurs s'exprime de la manière suivante :

$$\underline{x}(t)= \sum_{m=1}^{M_0} H_m{}^u \underline{r}^m{}_L(t) + \underline{b}^{M0}(t) = H_u \underline{r}^u{}_L(t)+ \underline{b}^{M0}(t) \qquad (13)$$

Où

$$\underline{b}^{M0}(t)= \sum_{m'=M_0+1}^{M} H_{m'} \, \underline{s}^{m'}{}_L(t) + \underline{b}(t)$$

Où

$$H_u =[\, H_1{}^u \ldots H_{M0}{}^u\,] \quad et \quad \underline{r}^u{}_L(t)= \begin{bmatrix} \underline{r}^{\mathbf{1}}{}_L(t) \\ . \\ \underline{r}^{M0}{}_L(t) \end{bmatrix}$$

L'exposant u fait référence aux signaux utiles.

Les matrices représentatives du canal de transmission $H_m{}^u$ et $H_{m'}$ ont l'expression suivante (14):

$$H_m{}^u = \sum_{p=1}^{P_m} \rho_{mp}\, \underline{a}(u_{mp})\, \boldsymbol{h_{mp}}^{u\mathsf{T}} =A_m B_m{}^u \quad et \quad H_{m'} = \sum_{p=1}^{P_{m'}} \rho_{m'p}\, \underline{a}(u_{m'p})\, \boldsymbol{h_{m'p}}^{\mathsf{T}} =A_{m'} B_{m'}$$

Où $A_m=[\underline{a}(u_{m1})\ldots \underline{a}(u_{mPm})]$ est la matrice des vecteurs directeurs des multi-trajets du $m^{ième}$ émetteur, $B_m{}^{u\mathsf{T}}=[\rho_{m1}\boldsymbol{h_{m1}}^u\ldots \rho_{mPm}\boldsymbol{h_{mPm}}^u]$ et $B_{m'}{}^{\mathsf{T}}=[\rho_{m'1}\boldsymbol{h_{m'1}}\ldots\rho_{m'Pm'}\boldsymbol{h_{m'Pm}}]$, $u_{mp}$ est l'incidence du $p^{ième}$ trajet du $m^{ième}$ utilisateur. $P_m$ correspond au nombre de multi-trajets du $m^{ième}$ émetteur. La présente invention a en particulier pour objectif d'estimer ce paramètre pour $1\leq m\leq M_0$.

Le vecteur de référence $\underline{r}^m{}_L(t)$ est composé du signal de référence $d_m(t)$, en étant défini par exemple pour deux émetteurs utiles de la façon suivante :

$$\underline{r}^{\mathbf{1}}{}_L(t)= \begin{bmatrix} d_1(t-(L/2)Te) \\ . \\ d_1(t+(L/2)Te) \end{bmatrix} \quad et \quad \underline{r}^{\mathbf{2}}{}_L(t)= \begin{bmatrix} d_2(t+\Delta t_{12}-(L/2)Te) \\ . \\ d_2(t+\Delta t_{12}+(L/2)Te) \end{bmatrix} \qquad (15)$$

avec : Te la période d'échantillonnage.

L = le nombre de décalages temporels du signal de référence. L'optimum est de choisir L égal à l'étalement temporel du canal de l'émetteur s'étalant le plus :

$\Delta t_{ij}= t_k(j)- t_k(i)$ la différence correspondant à deux signaux de référence $d_i(t)$ et $d_j(t)$ détectés aux instants respectifs $t_k(i)$ et $t_k(j)$ et qui correspondent aux 2 utilisateurs, dans ce cas $\Delta t_{12}$.

La figure 4 représente ce recouvrement temporel.

## Application du procédé à la détection des positions de synchro dans le cas de multi-trajets

Les signaux émis se propagent suivant plusieurs multi-trajets, par exemple avec un étalement temporel proche du temps symbole (Rythme de transmission des symboles d'un signal numérique ). Lorsque l'étalement temporel est proche du temps symbole les multi-trajets sont corrélés.

Sachant que la séquence de référence d(t) est présente entre les instants $t_k$ et $t_k+\delta t$ et que ses multi-trajets et interférences sont du bruit, $\underline{x}(t)$ s'écrit :

$$\underline{x}(t) = \underline{a}(u_0)\, d(t- t_k) + \underline{b}'(t) \qquad (16)$$

avec $\underline{a}(u_0)$ le vecteur directeur du trajet direct d'incidence $u_0$ et $t_k$ l'instant d'apparition du signal de référence transmis par ce trajet, et

$\underline{b}'(t)$ est constitué d'un mélange bruit et brouilleurs.

D'après les expressions (13) et (16), le signal s'exprime par exemple sous la forme :

$$\underline{x}(t) = H_1{}^u \, \underline{r}^1{}_L(t-t_k) \; + \underline{b}'(t) = \sum_{p=1}^{P_1} \rho_{1p} \, \underline{a}(u_{1p}) \, s_{1p}(t-t_k) + \underline{b}'(t) \qquad (17)$$

avec

$\rho_{1p}$ le facteur d'atténuation du $p^{\text{ième}}$ trajet et $\underline{u}_{1p}$ son incidence.

$$\underline{b}'(t) = \sum_{m=2}^{M_0} H_m{}^u \, \underline{r}^m{}_L(t) \; + \underline{b}^{M0}(t) \quad \text{d'après (13)}$$

$$\underline{r}^1{}_L(t) = \begin{bmatrix} d_1(t-(L/2)Te) \\ . \\ d_1(t+(L/2)Te) \end{bmatrix}$$

et

$$s_{1p}(t) = h_{1p}{}^T \underline{r}^1{}_L(t) = \rho_{1p} \, d_1(t-\tau_{1p})$$

$\underline{b}'(t)$ est composé du mélange bruit et brouilleurs et $t_k$ est la position de synchro du premier trajet de cet émetteur en posant $t_k = \tau_{1p}$. Chaque trajet a pour incidence $u_{1p}$ et un retard $\tau_{1p}$. L'étalement temporel du canal vaut donc

$$L + \max_{i,j} \, [|\tau_{1i} - \tau_{1j}|].$$

En faisant l'hypothèse que le vecteur de référence $\underline{r}^1{}_L(t-t_0)$ est synchronisé en $t_0$ en vérifiant $\underline{x}(t) = H_1{}^u \, \underline{r}^1{}_L(t-t_0)$, le procédé selon l'invention s'applique en posant :

$$\boxed{\begin{array}{c} \underline{u}(t) = \underline{r}^1{}_L(t-t_0) \;\; \text{avec } N_1 = L \\ \text{et} \\ \underline{v}(t) = \underline{x}(t) \;\; \text{avec } N_2 = N \end{array}} \qquad (18)$$

$N_1$ est égal au nombre de décalages temporels du signal de référence $d_1(t)$ et $N_2$ au nombre $N$ de capteurs de la station de base 3.

Sachant que pour la synchronisation on souhaite vérifier la présence ou l'absence du signal $\underline{r}^1{}_L(t-t_0)$, on va donc tester les deux hypothèses suivantes :

$H_0 : \underline{x}(t) = \underline{b}'(t) \Rightarrow$ Absence de signal de référence en $t_0$

$H_1 : \underline{x}(t) = H_1{}^u \, \underline{r}^1{}_L(t-t_0) + \underline{b}'(t) \Rightarrow$ Présence du signal $d_1(t)$ de référence en $t_0$ et synchronisation sur le premier trajet.

Dans ces conditions le rapport de vraisemblance $V_{uv}(M=0/M_0)$ $(t_0)$ est calculé de la manière suivante :

$$V_{uv}(M{=}0/M_0)(t_0){=}-2\ \delta t\ \ln\!\big(\det\!\big(\mathbf{I_L} - \mathbf{R}_{xd}(t_0)^H \mathbf{R}_{xx}(t_0)^{-1} \mathbf{R}_{xd}(t_0) \mathbf{R}_{dd}(t_0)^{-1}\big)\big)\quad (19)$$

avec :

$$\mathbf{R_{xx}}(t_0) = \frac{1}{\delta t}\sum_{t=t_0}^{t_0+\delta t}\underline{x}(t)\,\underline{x}(t)^H \qquad \mathbf{R_{xd}}(t_0)=\frac{1}{\delta t}\sum_{t=t_0}^{t_0+\delta t}\underline{x}(t)\,\underline{r}^1{}_L(t\text{-}t_0)^H$$

$$\mathbf{R_{dd}} =\frac{1}{\delta t}\sum_{t=t_0}^{t_0+\delta t}\underline{r}^1{}_L(t\text{-}t_0)\,\underline{r}^1{}_L(t\text{-}t_0)^H$$

Où IL désigne la matrice identité de dimension LxL. Dans ce cas $\delta t{=}T$, $U{=}\,\mathbf{R}_{dd}^{-1/2}\,\mathbf{R}_{xd}(t_0)^H\,\mathbf{R}_{xx}(t_0)^{-1/2}$ et on en déduit que :

$$V_{uv}(M{=}0/M_0) = -2\ \delta t\ \ln\!\left(\left[\prod_{m=1}^{N_1=L}\mu_m\right]\right) ={-}2\ \delta t\ \ln\!\big(\det(\mathbf{I}_L - UU^H)\big)\quad (20)$$

$$={-}2\ \delta t\ \ln\!\big(\det\!\big(\mathbf{I_L} - \mathbf{R}_{dd}(t_0)^{1/2}\mathbf{R}_{xd}(t_0)^H\mathbf{R}_{xx}(t_0)^{-1}\mathbf{R}_{xd}(t_0)\mathbf{R}_{dd}(t_0)^{-1/2H}\big)\big)\quad.$$

$$={-}2\ \delta t\ \ln\!\big(\det\!\big(\mathbf{I_L} - \mathbf{R}_{xd}(t_0)^H\mathbf{R}_{xx}(t_0)^{-1}\mathbf{R}_{xd}(t_0)\mathbf{R}_{dd}(t_0)^{-1}\big)\big)$$

Comme dans l'hypothèse $H_0$ où $M{=}M_0{=}0$, la variable aléatoire $V_{uv}(M/M_0)(t_0)$ suit une loi du chi-2 à $2(N_1{-}M)$ $(N_2{-}M){=}2NL$, on en déduit un seuil de détection $\alpha_0$ avec une probabilité de fausse alarme pfa tel que :

- Si $V_{uv}(M/M_0)(t_0){\geq}\alpha_0(pfa,L) \Rightarrow$ Il y a détection de $\underline{r}^1{}_L(t\text{-}t_0)$ et $t_0$ est une position de synchro car on est dans l'hypothèse $H_0$.
- Si $V_{uv}(M/M_0)(t_0){<}\alpha_0(pfa,L) \Rightarrow$ Il n'y a pas détection car on est dans l'hypothèse $H_1$.

Le seuil $\alpha_0$**(pfa,L)** est choisi dans une table du chi-2 pour une probabilité pfa et un nombre de degrés de libertés égal à 2NL. Pour sa mise en oeuvre, le procédé calcule en fonction de $t_0$ le critère $C_L(t_0)$ suivant :

$$C_L(t_0) =1{-}\det\!\big(\mathbf{I_L} - \mathbf{R}_{xd}(t_0)^H\mathbf{R}_{xx}(t_0)^{-1}\mathbf{R}_{xd}(t_0)\mathbf{R}_{dd}(t_0)^{-1}\big)\quad (21)$$

Sachant que dans l'hypothèse $H_1$ le rapport de vraisemblance vérifie $-2\delta t \ln(1{-}C_L(t_0)){=} V_{uv}(M/M_0)(t_0){>}\alpha_0(pfa, L)$, on cherche ensuite les maximums $t_k$ de $C_L(t_k)$ vérifiant l'expression :

$$C_L(t_k) > \eta(pfa,L)\ \text{avec}\ \eta(pfa,L) = 1{-} \exp\!\left\{\frac{-\alpha_0(pfa,L)}{2\delta t}\right\}\quad (22)$$

Les positions de synchro $t_k$ correspondront alors aux instants d'apparitions du vecteur de référence $\underline{r}^1{}_L(t)$ et

ainsi du signal de référence $d_1$(t). Ces instants peuvent ensuite être utilisés pour mettre en oeuvre une goniométrie à référence mono ou multi- références.

**Application à la détection du nombre de sources associés aux mêmes paramètres cycliques**

Selon une variante de mise en oeuvre de l'invention, le procédé permet de déterminer le nombre $M_0$ de sources associé aux mêmes paramètres cycliques. En considérant le vecteur observation **x**(t) de dimension $N_1$x1 reçu sur un réseau de $N_1$ capteurs et **y**(t) un second vecteur observation de dimension $N_2$x1 où $N_2 \neq N_1$ tels que:

$$\underline{x}(t) = \sum_{m=1}^{M_0} \underline{a}(u_m)\, s_m^0(t) + \underline{b}_u(t) \quad et \quad \underline{y}(t) = \sum_{m=1}^{M_0} \underline{c}(u_m)\, s_m^0(t) + \underline{b}_v(t) \qquad (23)$$

Où les $M_0$ sources de signal $s_m^0$(t) sont associées aux mêmes paramètres cyclique en vérifiant pour $(\alpha,\tau)$ et/ou $(\beta,\tau)$ :

$$r_m(\alpha,\tau) = <E[s_m^0(t)\, s_m^0(t-\tau)^*]\, \exp(j2\pi\alpha t)> \neq 0$$

et/ou

$$C_m(\beta,\tau) = <E[s_m^0(t)\, s_m^0(t-\tau)]\, \exp(j2\pi\beta t)> \neq 0 \qquad (24)$$

où E[ ] désigne l'espérance mathématique et <> la moyenne temporelle. Dans ces conditions les rangs des matrices d'intercorrélation suivantes sont égales à Mo :

$$R_{xy}(\alpha,\tau) = <E[\underline{x}(t)\, \underline{y}(t-\tau)^H]\, \exp(j2\pi\alpha t)> \qquad avec \qquad rang(R_{xy}(\alpha,\tau)) = M_0 \qquad (25)$$

et/ou

$$C_{xy}(\beta,\tau) = <E[\underline{x}(t)\, \underline{y}(t-\tau)^T]\, \exp(j2\pi\beta t)> \qquad avec \qquad rang(C_{xy}(\beta,\tau)) = M_0 \qquad (26)$$

Sachant que les estimateurs de ces matrices sur T échantillons vérifient :

$$\hat{R}_{xy}(\alpha,\tau) = \frac{1}{T} \sum_{k=1}^{T} \underline{x}(t_k)\, \underline{y}(t_k-\tau)^H\, \exp(j2\pi\alpha t_k) \qquad (27)$$

$$\hat{C}_{xy}(\beta,\tau) = \frac{1}{T} \sum_{k=1}^{T} \underline{x}(t_k)\, \underline{y}(t_k-\tau)^T\, \exp(j2\pi\beta t_k) \qquad (28)$$

Dans ces conditions pour déterminer $M_0$ on peut mettre en oeuvre le procédé des équations (9-12) on posant soit :

$$\boxed{\underline{u}(t) = \underline{x}(t) \quad et \quad \underline{v}(t) = \underline{y}(t-\tau)\, \exp(-j2\pi\alpha t)} \qquad (29)$$

soit :

$$\underline{u}(t)= \underline{x}(t) \quad et \quad \underline{v}(t)= \underline{y}(t-\tau)^* \exp(j2\pi\beta t)$$

$$(30)$$

Le vecteur **y**(t) est soit issu d'un sous-réseau du réseau de capteurs de l'observation **x**(t) soit issu d'un autre réseau composé de $N_2$ capteurs.

## Application à la détection du nombre de multi-trajets Pm pour une goniométrie mono ou multi-utilisateurs

Selon une autre variante de mise en oeuvre de l'invention, le procédé permet de déterminer le nombre de multi-trajets provenant d'un émetteur. Le signal émis par une source ou mobile se propage dans la majorité des cas selon plusieurs trajets, trajets directs ou trajets avec réflexion.

Le procédé permet par exemple de déterminer le nombre de multi-trajets d'un émetteur de signal connu $d_m$(t) ou signal de référence inclus dans la trame du signal à partir du vecteur d'observation $\underline{x}$(t) reçu par le réseau de capteurs.

Un émetteur est par exemple constitué de plusieurs sources et le modèle du signal s'écrit sous la forme :

$$\underline{x}(t)= \sum_{m=1}^{M_0} \sum_{p=1}^{P_m} \rho_{mp}\, \underline{a}(u_{mp})\, \boldsymbol{h_{mp}}^{uT}\, \underline{r}^m{}_L(t) + \underline{b}^{M0}(t) \qquad (31)$$

avec

$$\underline{b}^{M0}(t)= \sum_{m'=M_0+1}^{M} \sum_{p=1}^{P_{m'}} \rho_{m'p}\, \underline{a}(u_{m'p})\, \boldsymbol{h_{m'p}}^{T}\, \boldsymbol{s}^{m'}{}_L(t) + \underline{b}(t)$$

où $\underline{b}^{M0}$(t) est la composante du signal comprenant le bruit et les brouilleurs. Sachant que la fonction de transfert $H_m{}^u$ de la $m^{ième}$ émetteur vérifie la relation suivante :

$$H_m{}^u = \sum_{p=1}^{P_m} \rho_{mp}\, \underline{a}(u_{mp})\, \boldsymbol{h_{mp}}^{T} \qquad\qquad (32)$$

Après que le procédé ait estimé les fonctions de transfert $H_m{}^u$ des émetteurs pour $1 \leq m \leq M_0$, on peut isoler le signal du $m^{ième}$ émetteur en effectuant l'opération suivante :

$$\underline{x}^m(t) =\underline{x}(t) - \sum_{m=m'}^{M_0} H_{m'}{}^u\, \underline{r}^{m'}{}_L(t) \qquad (33)$$

Les fonctions de transfert sont estimées en mettant en oeuvre une méthode décrite ci-après dans le paragraphe "Séparation des émetteurs ou utiles" qui permet d'identifier séparément les matrices de transfert $H_m{}^u$ de chacun des émetteurs. La connaissance des matrices de transfert de tous les émetteurs permet alors d'isoler le signal $x^m$(t) du $m^{ième}$ émetteur. Le procédé consiste alors, par exemple à appliquer le principe de détection du nombre Pm de multi-trajets sur le signal $x^m$(t). D'après l'expression (9), on en déduit que le signal $\underline{x}^m$(t) vérifie l'expression :

$$\underline{x}^m(t) = H_m{}^u\, \underline{r}^m{}_L(t) + \underline{b}^{M0}(t)= \sum_{p=1}^{P_m} \rho_{mp}\, \underline{a}(u_{mp})\, s_{mp}(t) + \underline{b}^{M0}(t) \quad (34)$$

avec

$$\underline{r}^m{}_L(t)= \begin{bmatrix} d_m(t-(L/2)Te) \\ d_m(t+(\dot{L}/2)Te) \end{bmatrix} \quad \text{et} \quad s_{mp}(t) = \boldsymbol{h_{mp}}^T \, \underline{r}^m{}_L(t)=\rho_{mp} \, r_m(t- \tau_{mp})$$

où $P_m$ désigne le nombre de multi-trajets $s_{mp}(t)$ le signal du $p^{\text{ième}}$ trajet et $u_{mp}$ son incidence. On rappel que le signal $\underline{x}^m(t)$ est issu d'une technique multi-utilisateurs isolant le signal du $m^{\text{ième}}$ utilisateur. Sachant que le nombre de sources brouilleur $M_b$ vaut :

$$M_b= \sum_{m'=M_0+1}^{M} P_m{}' \qquad \text{avec } P_m + M_b = M_T \qquad\qquad (35)$$

$M_b$ est alors le nombre de sources du vecteur observation $\underline{b}^{m0}(t)$. L'objectif du test de détection est d'estimer le nombre de multi-trajets $P_m$ du $m^{\text{ième}}$ émetteur. Dans tous les cas on détecte tout d'abord le nombre $M_T$ de sources incidentes. Le signal de référence $d_m(t)$ permet de construire le vecteur de référence $\underline{r}^m{}_L(t)$. L'objectif de la détection est de trouver une cohérence entre les observations $\underline{x}^m(t)$ et le vecteur de référence $\underline{r}^m{}_L(t)$. On prend :

$$\underline{u}(t)= \underline{r}^m{}_L(t) \qquad \dim\{\underline{u}(t)\}=N_1 x1 \text{ avec } N_1=L \qquad\qquad (36)$$

L correspond au nombre de décalage temporel du signal de référence $d_m(t)$.

Le rang de la matrice de covariance du signal $\underline{b}^{M0}(t)$ vaut $M_T - P_m$ : Cette matrice $R_{bb}$ se calcule à partir des signaux $\underline{x}(t)$ et $\underline{r}^u{}_L(t)$ comme décrit ci-dessus. Après une décomposition en éléments propres de $R_{bb}$ on extrait la matrice unitaire $P_{roj}(P_m)$ de dimension N x (N-( $M_T - P_m$)) orthogonale à tous les vecteurs directeurs $\underline{a}(u_{m'p})$ des brouilleurs tel que :

$$P_{roj}(P_m)^H \, \underline{a}(u_{m'p})=0 \qquad \text{pour } m'>M_0 \qquad\qquad (37)$$

où les $\underline{a}(u_{m'p})$ sont les vecteurs directeurs des brouilleurs. La matrice unitaire $P_{roj}(P_m)$ est composée des N-( $M_T - P_m$) vecteurs propres de $R_{bb}$ associés aux plus petites valeurs propres. On construit le vecteur $\underline{v}(t)$ de la façon suivante :

$$\underline{v}(t) = P_{roj}(M_u)^H \, \underline{x}^m(t) = H_m{}^P \, \underline{r}^m{}_L(t) + \underline{b}^P(t) \qquad\qquad (38)$$

$$\dim\{\underline{v}(t)\}=N_2 x1 \text{ avec } N_2= N-( M_T - P_m)$$

où

$$H_m{}^P = P_{roj}(P_m)^H \, H_m{}^u \text{ et } \underline{b}^P(t)= P_{roj}(P_m)^H \underline{b}(t)$$

N est le nombre de capteurs de la station de base 3 et $M_T$ le nombre total de sources et $P_m$ le nombre de multi-trajets du $n^{\text{ième}}$ émetteur.

Les signaux $\underline{u}(t)$ et $\underline{v}(t)$ ont le signal $\underline{r}^m{}_L(t)$ en commun. Dans ces conditions, le nombre $P_m$ de multi-trajets du $m^{\text{ième}}$ émetteur est estimé en mettant en oeuvre le test de détection décrit précédemment, en choisissant des valeurs particulières pour les longueurs $N_1$ et $N_2$ des observations.

Le procédé construit le rapport de vraisemblance $V_{uv}(M/P_m)$ en choisissant $N_1= L$ et $N_2= N-( M_T - P_m)$, ce qui conduit à la loi de probabilité suivante :

$$V_{uv}([M=P_m]/P_m) \sim \text{Chi-2}$$

$$\text{à } 2(L-P_m) (N-M_T)=2(L-P_m)( N_2-P_m) \text{ degrés de libertés} \qquad (39).$$

La connaissance de la statistique de $V_{uv}(M=P_m/P_m)$ permet de choisir les seuils $\alpha_M$ (M=0,1,...) dans la table du chi-2 avec une probabilité de fausse alarme fixée à $p_{fa}$ et un nombre de degrés de liberté égale à $2(L-P_m) (N-M_T)$. Le test est le suivant :

si $V_{uv}(M/P_m) \geq \alpha_M$ le nombre de sources $P_m$ présentes est supérieur à M,
si $V_{uv}(M/P_m) < \alpha_M$ le nombre de sources $P_m$ présentes est inférieur ou égal M.

Les étapes du test de détection sont alors les suivantes :

**Etape n°1** : Calcul de $R_{bb}$ selon l'expression (41) donnée ci-après
**Etape n°2** : $\underline{u}(t)= \underline{r}^m{}_L(t)$ et M=0
**Etape n°3** : Calcul de $P_{roj}(M)$ à partir de $R_{bb}$
**Etape n°4** : Calcul de $\underline{v}(t)=P_{roj}(M)^H \underline{x}^m(t)$
**Etape n°5** : Calcul de $V_{uv}(M/P_m)$
**Etape n°6** : $\rightarrow$ si $V_{uv}(M/P_m) \geq \alpha_M$ alors M=M+1 et retour à l'étape n°3
$\qquad \rightarrow$ si $V_{uv}(M/P_m) < \alpha_M$ alors $P_m$=M et arrêt du test de détection

**Séparation des émetteurs ou utiles**

La séparation des émetteurs consiste à estimer la matrice de transfert $H_u=[H_1^u ... H_{M0}^u]$ puis à extraire de $H_u$ les matrices $H_m^u$ associées à chacun des $M_0$ émetteurs utiles. Le procédé estime la matrice $H_u$ au sens des moindres carré comme dans le cas mono-utilisateur. Ainsi d'après l'expression (13) le procédé estime $H_u$ en minimisant l'écart entre $H_u \underline{r}^u{}_L(t)$ et $\underline{x}(t)$. En réalisant ce moindre carré entre les instants $t_{min}$ et $t_{max}$ on obtient :

$$\hat{H}_u = \hat{R}_{xr}{}^u (R_{rr}{}^u)^{-1} \qquad (40)$$

avec

$$\hat{R}_{xr}{}^u = \frac{1}{t_{max} - t_{min}} \sum_{t=t_{min}}^{t_{max}} \underline{x}(t) \underline{r}^u{}_L(t)^H \quad \text{et} \quad \hat{R}_{rr}{}^u = \frac{1}{t_{max} - t_{min}} \sum_{t=t_{min}}^{t_{max}} \underline{r}^u{}_L(t) \underline{r}^u{}_L(t)^H$$

En posant $\underline{b}^{M0}(t)= \underline{x}(t)- H_u \underline{r}^u{}_L(t)$ on en déduit que la matrice de covariance de ce vecteur bruit+brouilleurs vaut :

$$\hat{R}_{bb}{}^u = \frac{1}{t_{max} - t_{min}} \sum_{t=t_{min}}^{t_{max}} \underline{b}^{M0}(t) \underline{b}^{M0}(t)^H = \hat{R}_{xx} - \hat{H}_u \hat{R}_{xr}{}^{u\,H} = \hat{R}_{xx} - \hat{R}_{xr}{}^u \left(\hat{R}_{rr}{}^u\right)^{-1} \hat{R}_{xr}{}^{u\,H}$$

avec

$$\hat{R}_{xx} = \frac{1}{t_{max} - t_{min}} \sum_{t=t_{min}}^{t_{max}} \underline{x}(t) \underline{x}(t)^H$$

$$\hat{R}_{bb}{}^u = \hat{R}_{xx} - \hat{R}_{xr}{}^u \left(\hat{R}_{rr}{}^u\right)^{-1} \hat{R}_{xr}{}^u{}^\dagger \tag{41}$$

Comme les matrices $\hat{H}_m{}^u$ sont des sous-blocs de la matrice $\hat{H}_u$ en vérifiant $\hat{H}_u = [\hat{H}_1{}^u ... \hat{H}_{M0}{}^u]$ elles sont extraites directement de $H_u$ en sélectionnant les bonnes colonnes. On a donc séparé les signaux utiles et estimé la matrice de covariance $R_{bb}{}^u$ de la composante bruit+brouilleurs. On remarque que pour estimer les matrices $R_{bb}{}^u$ et $R_m{}^u$ on fait intervenir la matrice $R_{rr}{}^u$ qui est la matrice de covariance du vecteur $\underline{r}{}^u{}_L(t)$. Cette matrice a, d'après (13) et (14), la structure suivante :

$$\hat{R}_{rr}{}^u = \begin{bmatrix} \hat{r}_{11}(0) & \cdot & \hat{r}_{11}(L)^* & \cdot & \hat{r}_{M_01}(L)^* \\ & \cdot & & & \\ \hat{r}_{11}(L) & & \hat{r}_{11}(0) & & \\ \cdot & & & \cdot & \cdot \\ \hat{r}_{M_01}(0) & \cdot & \hat{r}_{M_01}(-L) & \hat{r}_{M_0M_0}(0) & \\ \cdot & & & & \cdot \\ \hat{r}_{M_01}(L) & \cdot & \hat{r}_{M_01}(0) & \cdot & \hat{r}_{M_0M_0}(L_T) & \cdot & \hat{r}_{M_0M_0}(0) \end{bmatrix} \tag{42}$$

On voit que la matrice fait intervenir des termes $\hat{r}_{ij}(T)$ d'intercorrélation entre les signaux de référence $d_i(t)$ et $d_j(t-T)$ tels que :

$$\hat{r}_{ij}(T) = \frac{1}{t_{max} - t_{min}} \sum_{t=t_{min}}^{t_{max}} d_i(t)\, d_j(t-T)^* \tag{43}$$

Dans ces conditions, la méthode multi-utilisateurs exploite les coefficients de corrélations $\hat{r}_{ij}(T)$ entre les signaux de références, non nécessairement nuls. Cette remarque permet de vérifier intuitivement que l'utilisation des coefficients $r_{ij}(T)$ est nécessaire pour réaliser la séparation de signaux de référence $d_i(t)$ et $d_j(t)$ dans le cas corrélé.

Avantageusement, par rapport aux méthodes décrites dans l'art antérieur, le test présente comme avantage de fonctionner en présence de bruit $\underline{b}^{M0}(t)$ spatialement non blanc. En effet en pratique le bruit n'a jamais cette propriété : Il est composé du bruit des récepteurs dont la matrice de covariance peut être mesurée et du bruit atmosphérique non mesurable composé en particulier des brouilleurs.

Dans ce test, la connaissance des signaux de références $d_m(t)$ pour $1 \le m \le M_0$ des utiles permet de mesurer la matrice de covariance du bruit atmosphérique et par conséquent d'appliquer un test de détection statistique.

**Revendications**

1. Procédé de détection de sources émettrices de radiocommunication $M_0$ communes à plusieurs observations $\underline{u}(t)$ et $\underline{v}(t)$ correspondant à des signaux issus des sources émettrices et ayant des longueurs $N_1$ et $N_2$ différentes, au sein d'un seul réseau de capteurs, les signaux émis par les sources ayant une séquence de référence $d(t)$, comprenant les étapes suivantes :

   • définir une loi de vraisemblance $V_{uv}([M=M_0]/M_0)$ sensiblement égale à une loi de Chi-2 à $2(N_1-M_0)(N_2-M_0)$ degrés de libertés avec $N_1 \le N_2$,

   $$\dim\{\underline{u}(t)\} = N_1 x 1 \text{ et } \dim\{\underline{v}(t)\} = N_2 x 1,$$

- déterminer un seuil de détection $\alpha_M$ afin d'obtenir une probabilité de fausse alarme faible et afin d'obtenir un nombre de degrés de liberté tenant compte des longueurs $N_1$ et $N_2$ et du nombre de sources $M_0$,
- déterminer la présence et/ou le nombre des sources Mo en appliquant la loi de vraisemblance et le seuil $\alpha_M$.

**caractérisé en ce que**

- on prend comme vecteur d'observation $\underline{u}(t)$ le vecteur de référence $\underline{r}^1{}_L(t\text{-}t_0)$ composé du signal de référence $d_1(t)$ de la source émettrice m=1 avec $N_1$=L et comme vecteur d'observation $\underline{v}(t)$ le vecteur reçu $\underline{x}(t)$ sur les capteurs avec $N_2$=N (L correspond au nombre de décalages temporels du signal de référence, *N* correspond au nombre de capteurs),
- on détermine la ou les positions de synchronisation correspondant aux instants du vecteur référence $\underline{r}^1{}_L(t\text{-}t_0)$.

**2.** Procédé selon la revendication 2 **caractérisé en ce qu'**il comporte une étape de détermination du nombre Pm de multi-trajets pour une source émettrice m donnée en cherchant une cohérence entre les observations $\underline{x}^m(t)$ et le vecteur de référence $\underline{r}^m{}_L(t)$ et en vérifiant $\underline{u}(t)= \underline{r}^m{}_L(t)$ et dim$\{ \underline{u}(t)\}$=$N_1$x1 avec $N_1$=L.

**3.** Procédé selon la revendication 2 **caractérisé en ce qu'**il comporte une étape de goniométrie mono ou multi-références.

**4.** Utilisation du procédé selon l'une des revendications 1 à 3 pour déterminer la présence et/ou le nombre de sources communes à au moins deux observations présentant des longueurs différentes dans un système de radiocommunication de type GSM.

**5.** Dispositif permettant de déterminer la présence et/ou le nombre de sources émettrices de radiocommunication à au moins deux observations $\underline{u}(t)$ et $\underline{v}(t)$ **caractérisé en ce qu'**il comporte au moins un seul réseau de *N* capteurs et un processeur adapté à mettre en oeuvre les étapes de la revendication 1.

**Claims**

**1.** Method of detecting radiocommunication transmitting sources $M_0$ common to several observations $\underline{u}(t)$ and $\underline{v}(t)$ corresponding to signals emanating from the transmitting sources and having different lengths $N_1$ and $N_2$, within a single array of sensors, the signals transmitted by the sources having a reference sequence d(t), comprising the following steps:

- defining a likelihood law $V_{uv}([M=M_0]/M_0)$ substantially equal to a Chi-2 law with $2(N_1 - M_0)(N_2-M_0)$ degrees of freedom with $N_1 \leq N_2$,

$$\dim \{\underline{u}(t)\} = N_1 x1 \text{ and } \dim\{\underline{v}(t)\} = N_2 x1,$$

- determining a detection threshold $\alpha_M$ so as to obtain a low false alarm probability and to obtain a number of degrees of freedom taking account of the lengths $N_1$ and $N_2$ and of the number of sources $M_0$,
- determining the presence and/or the number of the sources $M_0$ by applying the likelihood law and the threshold $\alpha_M$,

**characterized in that**

- the reference vector $\underline{r}^1{}_L(t\text{-}t_0)$ composed of the reference signal $d_1(t)$ of the transmitting source m = 1 with $N_1$ = L is taken as observation vector $\underline{u}(t)$ and the vector received $\underline{x}(t)$ on the sensors with $N_2$ = N (L corresponds to the number of time shifts of the reference signal, N corresponds to the number of sensors) is taken as observation vector $\underline{v}(t)$,
- the synchronization position or positions corresponding to the instants of the reference vector $\underline{r}^1{}_L(t\text{-}t_0)$ is or are determined.

**2.** Method according to Claim 1 **characterized in that** it comprises a step of determining the number Pm of multipaths for a given transmitting source m by searching for a coherence between the observations $\underline{x}^m(t)$ and the reference vector $\underline{r}^m{}_L(t)$ and by satisfying $\underline{u}(t) = \underline{r}^m{}_L(t)$ and dim$\{\underline{u}(t))\}$ = $N_1$x1 with $N_1$ = L.

**3.** Method according to Claim 2, **characterized in that** it comprises a step of mono- or multi-reference goniometry.

**4.** Use of the method according to one of Claims 1 to 3 to determine the presence and/or the number of sources common to at least two observations exhibiting different lengths in a GSM type radiocommunication system.

**5.** Device making it possible to determine the presence and/or the number of radiocommunication transmitting sources common to at least two observations $\underline{u}(t)$ and $\underline{v}(t)$ **characterized in that** it comprises at least a single array of N sensors and a processor adapted to implement the steps of Claim 1.

**Patentansprüche**

**1.** Verfahren zur Erfassung von Funkverkehr-Sendequellen $M_0$, die mehreren Beobachtungen $\underline{u}(t)$ und $\underline{v}(t)$ gemeinsam sind, welche Signalen entsprechen, die von den Sendequellen stammen und unterschiedliche Längen $N_1$ und $N_2$ haben, innerhalb eines gemeinsamen Netzes von Empfängern, wobei die von den Quellen ausgesendeten Signale eine Referenzfolge d(t) haben, wobei das Verfahren die folgenden Schritte aufweist:

- Definition eines Wahrscheinlichkeitsgesetzes $V_{uv}([M=M_0]/M_0)$ im Wesentlichen gleich einem Chi-Quadrat-Gesetz mit $2 (N_1-M_0) (N_2-M_0)$ Freiheitsgraden, wobei gilt $N_1 \leq N_2$,

$$dim\{\underline{u}(t)\}=N_1 \times 1 \text{ und } dim\{\underline{v}(t)\}=N_2 \times 1,$$

- Bestimmung einer Erfassungsschwelle $\alpha_M$ für den Erhalt einer geringen Wahrscheinlichkeit eines Fehlalarms und für den Erhalt einer Anzahl von Freiheitsgraden unter Berücksichtigung der Längen $N_1$ und $N_2$ und der Anzahl $M_0$ von Quellen,
- Bestimmung des Vorhandenseins und/oder der Anzahl $M_0$ von Quellen durch Anwenden des Wahrscheinlichkeitsgesetzes und der Schwelle $\alpha_M$,

**dadurch gekennzeichnet, dass**

- als Beobachtungsvektor $\underline{u}(t)$ der Referenzvektor $\underline{r}^1_L(t-t_0)$ genommen wird, der aus dem Referenzsignal $d_1(t)$ der Sendequelle m=1 mit $N_1$=L besteht, und als Beobachtungsvektor $\underline{v}(t)$ der an den Empfängern empfangene Vektor $\underline{x}(t)$ mit $N_2$=N genommen wird (L entspricht der Anzahl von Zeitverschiebungen des Referenzsignals, N entspricht der Anzahl von Empfängern),
- die Synchronisationsposition oder -positionen bestimmt werden, die den Momenten des Referenzvektors $\underline{r}^1_L(t-t_0)$ entsprechen.

**2.** Verfahren nach Anspruch 1, **dadurch gekennzeichnet, dass** es einen Schritt der Bestimmung der Anzahl Pm von Vielfachwegen für eine gegebene Sendequelle m enthält, indem eine Kohärenz zwischen den Beobachtungen $\underline{x}^m(t)$ und dem Referenzvektor $\underline{r}^m_L(t)$ gesucht wird und indem $\underline{u}(t) = \underline{r}^m_L(t)$ und $dim\{\underline{u}(t)\}=N_1 \times 1$ mit $N_1$=L bestätigt wird.

**3.** Verfahren nach Anspruch 2, **dadurch gekennzeichnet, dass** es einen Schritt der Einzel- oder Vielfach-Referenz-Goniometrie enthält.

**4.** Verwendung des Verfahrens nach einem der Ansprüche 1 bis 3 zur Bestimmung des Vorhandenseins und/oder der Anzahl von Quellen, die mindestens zwei Beobachtungen unterschiedlicher Längen in einem Funkverkehrsystem vom Typ GSM gemeinsam sind.

**5.** Vorrichtung, die es ermöglicht, das Vorhandensein und/oder die Anzahl von mindestens zwei Beobachtungen $\underline{u}(t)$ und $\underline{v}(t)$ gemeinsamen Funkverkehr-Sendequellen zu bestimmen, **dadurch gekennzeichnet, dass** sie mindestens ein gemeinsames Netz von N Empfängern und einen Prozessor aufweist, der ausgelegt ist, um die Schritte des Anspruchs 1 durchzuführen.

OBSTACLES
4

ÉMETTEUR
1

⟶ TRAJET DIRECT

⇢ MULTI-TRAJETS

4

RÉSEAU DE $N_1$
CAPTEURS
2

RÉSEAU DE $N_2$
CAPTEURS
3

$\underline{u}(t-t_{ini})$

$\underline{v}(t-_{ini})$

SYSTÈME MAÎTRE
DE GONIO

$t_{ini}$

SYSTÈME
DE GONIO

$\underline{v}(t-_{ini})$

FIG.1

$s_e(t)$

$d(t)$

$d(t)$

TEMPS (t)

$t_1$

$\delta t$

$t_2$

$\delta t$

FIG.2

FIG.3

FIG.4